# DEMANDE DE BREVET EUROPEEN

(11) **EP 4 353 606 A1**
(43) Date de publication de la demande: **17.04.2024**
(21) Numéro de dépôt: 23203444.7
(22) Date de dépôt: 13.10.2023
(51) Int. Cl.: B65B 9/207, B65B 25/00, B65B 31/04, B65B 51/10, B65B 63/08, B65B 51/14, B65B 55/14, B32B 27/08, B32B 27/32, B32B 27/34, B32B 15/088

(54) **SYSTÈME ET PROCÉDÉ DE CONDITIONNEMENT D'ALIMENT DE TYPE PURÉE ET/OU LIQUIDE**

(30) Priorité: 14.10.2022 FR 2210594
(71) Demandeur: Odin, 13610 Le Puy Sainte Reparade (FR)
(72) Inventeur: BEDIN, Olivier, 13100 Le Tholonet (FR)
(74) Mandataire: Aquinov

(57) **Abrégé**

L'invention concerne un système de conditionnement (1) d'aliment de type purée et/ou liquide.

Selon l'invention, le système (1) comprend :
- Un système de fourniture (2) en continu d'un film thermoscellable (21) ;
- Un dispositif de formation (3) séquentiel de contenants (10) à partir du film thermoscellable (21) ;
- Un système de pasteurisation (4) de l'aliment, équipé d'un dispositif de remplissage (5) à chaud de chaque contenant (10), formé par le dispositif de formation (3), par une quantité donnée d'aliment pasteurisé, le dispositif de remplissage (5) à chaud étant agencé pour distribuer ladite quantité donnée d'aliment pasteurisé à une température supérieure à 80°C ; et
- Un système de fermeture (6) par thermo-scellage de chaque contenant (10) rempli de ladite quantité donnée.

## Description

### Domaine technique.

L'invention se rapporte au domaine technique des dispositifs de conditionnement d'aliments, plus particulièrement aux dispositifs de conditionnement de purée de bananes, notamment dans des contenants opaques.

### Etat de la technique.

La banane est devenue une commodité sur le marché des matières premières, faisant de cette dernière, un bien de consommation majeur que l'on retrouve dans de nombreux produits alimentaires, par exemple dans des gourdes de compote.

Il est connu de conditionner la banane sous forme de purée à température ambiante, dit conditionnement « à froid » afin de conserver les caractéristiques organoleptiques et/ou nutritionnelles de l'aliment, notamment la couleur jaune de la banane.

Cependant, une telle méthode de conditionnement de la purée de bananes, nécessite un contrôle renforcé de l'hygiène afin d'éviter la prolifération de germes et de bactéries, ce qui rend le conditionnement problématique.

Ainsi, l'utilisation d'un système de conditionnement de la purée de bananes dit « à froid » nécessite l'emploi d'une installation aseptisée. L'emploi d'une telle installation entraine un coût fixe très élevé.

En effet, le conditionnement à froid de la purée de bananes, nécessite l'utilisation de poches vides aseptisées équipées d'un bouchon spécifique, lui-même stérile.

De plus, ce bouchon spécifique n'est utilisable qu'avec la poche vide afférente, augmentant à nouveau le coût du conditionnement de la purée de bananes. De fait, le bouchon est stérilisé en amont et est conditionné de manière à rester stérile jusqu'à son utilisation.

L'usage de ces poches aseptisées et de leur bouchon n'est pas forcément justifié selon l'application, à laquelle ces éléments sont destinés. En effet, l'utilisation de bouchons spécifiques pour chaque poche contraint, le changement dudit bouchon pour chaque remplissage des poches.

Généralement, et afin de réduire le coût de remplissage des poches, ces dernières doivent avoir une grande capacité de contenant à plus de 200 kilogrammes.

Ces poches d'un contenant de 200 kilogrammes nécessitent une épaisseur de matière importante et l'usage un bidon métallique pour le transport.

Par conséquent, l'utilisation d'une poche, d'un bouchon aseptisé, mais aussi de bidons métalliques engendrent un conditionnement onéreux et une empreinte carbone plus importante. Effectivement, ces différents éléments impliquent l'usage d'une quantité plus importante de matières premières, ou encore de produits stérilisants.

L'invention se place donc dans ce contexte et cherche à résoudre l'ensemble des inconvénients précités.

Ainsi, l'invention cherche à rendre l'utilisation d'un système de conditionnement de purée de bananes moins onéreuse, plus facile et ayant une empreinte carbone plus faible. Présentation de l'invention.

L'invention a pour objet un système de conditionnement d'aliment de type purée et/ou liquide aisé d'utilisation, fiable ayant un impact écologique faible et abordable.

A cet effet, il a été mis au point un système de conditionnement d'aliment de type purée et/ou liquide qui selon l'invention, comprend :
- Un système de fourniture en continu d'un film thermoscellable ;
- Un dispositif de formation séquentiel de contenants à partir du film thermoscellable ;
- Un système de pasteurisation de l'aliment, équipé d'un dispositif de remplissage à chaud de chaque contenant, formé par le dispositif de formation, par une quantité donnée d'aliment pasteurisé, le dispositif de remplissage à chaud étant agencé pour distribuer ladite quantité donnée d'aliment pasteurisé à une température supérieure à 80°C ; et ;
- Un système de fermeture par thermo-scellage de chaque contenant rempli de ladite quantité donnée.

Avantageusement, un tel système par un conditionnement à chaud et en continu permet de réduire de manière significative son coût d'utilisation. En effet, l'utilisation d'un tel système permet de se dispenser des étapes de contrôle en continu sur l'hygiène du système ou encore du contenant.

De plus, le fait d'utiliser un conditionnement à chaud des aliments sous forme de purée et/ou liquide permet d'éliminer l'utilisation d'un bouchon aseptique spécifique aux poches vides aseptisées, réduisant à nouveau le cout d'utilisation du système.

Au surplus, l'automatisation en continu de la formation et du remplissage du contenant permet d'améliorer la productivité du système selon l'invention.

De cette manière, la limitation du nombre de pièces à utiliser pour conditionner les aliments de type purée ou liquide permet de réduire l'impact écologique du système.

Enfin, le fait de réduire le nombre d'opérations à effectuer par l'opérateur sur le système, notamment le changement du bouchon pour chaque contenant, permet de rendre son utilisation plus aisée.

Dans un mode de réalisation préféré, le dispositif de formation et le dispositif de remplissage à chaud sont agencés de sorte que la formation et le remplissage du contenant soient réalisés de manière concomitante.

Ainsi, le conditionnement des aliments est effectué de manière plus rapide et permet un gain de productivité.

Dans un mode de réalisation particulier, le dispositif de formation comporte un manchon creux cylindrique, autour duquel vient se former le contenant à partir du film thermoscellable.

De préférence, le dispositif de formation comporte un manchon creux de forme géométrique adapté. Par exemple, le manchon peut être sous une forme rectangulaire ou triangulaire.

Selon un mode de réalisation préféré, le dispositif de remplissage comporte une ensacheuse comprenant un guide de remplissage du contenant, préalablement formé, traversant le manchon du dispositif de formation séquentiel de contenants.

Ainsi, la formation du contenant peut être réalisée en fonction du remplissage de ce dernier préalablement formé. Une telle disposition permet une accélération du remplissage du contenant.

En effet, le contenant commence à se remplir dès que le bas du contenant est réalisé, ce qui permet un gain de productivité et par conséquent une réduction du cout de conditionnement de l'aliment.

De préférence, le film thermoscellable comprend une peau extérieure et une peau intérieure, chaque peau est composée d'au moins deux couches.

Plus précisément, la peau extérieure comprend une couche supérieure en métal, plus particulièrement une couche en métallique en polyester d'une épaisseur de 12 micromètres, une couche intermédiaire en nylon d'une épaisseur de 15 micromètres et une couche inférieure en polyéthylène basse densité linéaire, LLDPE d'une épaisseur de 50 micromètres.

La peau intérieure comprend une couche supérieure et inférieure composées par un mélange de LLDPE, d'une épaisseur de 50 micromètres chacune.

Ainsi, le contenant permet une meilleure conservation de l'aliment, tout en limitant la quantité de matière à utiliser.

Dans un mode de réalisation préféré, et afin de réduire la quantité de matière utilisée pour la formation du sac mais aussi permet de faciliter le transport et le stockage de ces derniers, le dispositif de formation séquentiel de contenants à partir du film thermoscellable est agencé pour former des sacs d'une contenance de 20 kilogrammes.

Dans un mode de réalisation particulier, le système de conditionnement comprend un système de refroidissement du contenant préalablement rempli de la quantité donnée d'aliment, ledit dispositif comporte un ensemble de vaporisateurs d'eau ou encore tout type de système de refroidissement, par exemple une chambre froide.

Ainsi, le refroidissement de l'aliment conditionné à chaud permet une meilleure conservation des propriétés organoleptiques des aliments.

Dans un autre mode de réalisation, le système de conditionnement comprend des moyens d'injection de gaz inerte dans le contenant.

Ainsi, l'ajout d'une étape d'inertage du contenant permet de « chasser » l'oxygène présent dans le contenant afin de réduire l'oxydation du produit une fois le contenant fermé, ce qui entraine une meilleure conservation de l'aliment conditionné.

Dans un mode de réalisation particulier, l'étape d'inertage peut être réalisée en amont ou de manière concomitante au remplissage du contenant.

L'invention concerne également un procédé de conditionnement à chaud et en continu d'un aliment de type purée et/ou liquide mettant en oeuvre le système de conditionnement.

Selon l'invention, le procédé comprend les étapes suivantes :
- Fourniture en continu d'un film thermoscellable ;
- Formation séquentielle de contenant à partir du film thermoscellable par le dispositif de formation séquentiel de contenants ;
- Pasteurisation de l'aliment ;
- Inertage du contenant ;
- Remplissage d'une quantité déterminée à chaud du contenant, formé au préalable ;
- Fermeture du contenant ; et
- Refroidissement du contenant par vaporisation d'eau.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig. 1] est une représentation schématique du système de conditionnement selon l'invention.
[Fig. 2] est une vue en perspective du système de conditionnement montrant la formation du contenant.
[Fig. 3] représente la peau extérieure du contenant.
[Fig. 4] représente la peau intérieure du contenant.

Dans la description qui suit, les éléments identiques, par structure ou par fonction, apparaissant sur différentes figures conservent, sauf précision contraire, les mêmes références.

### Description des modes de réalisation.

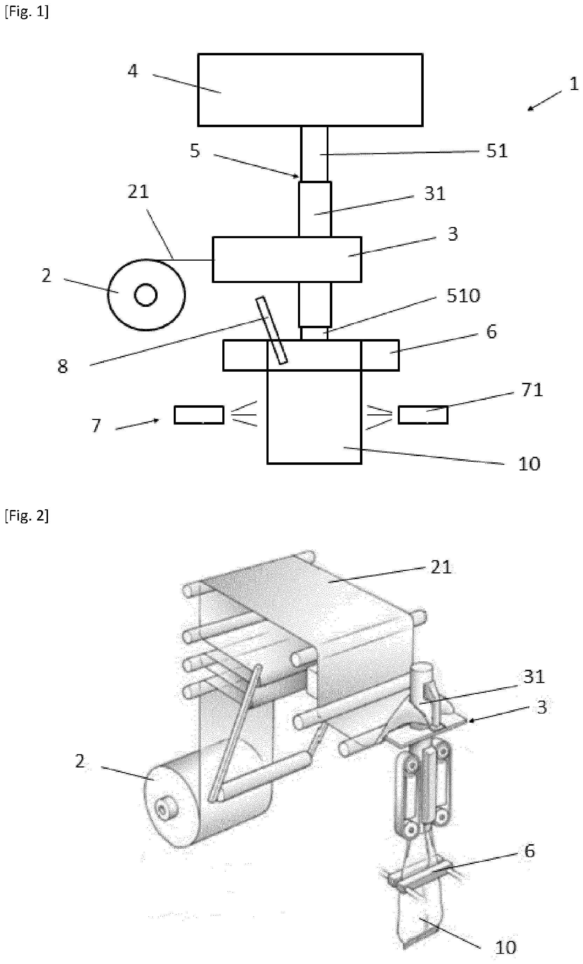

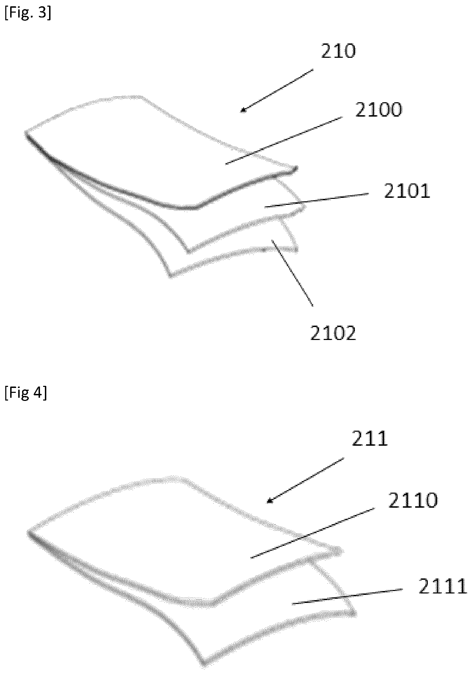

En référence aux [Fig. 1] à [Fig. 4], la présente invention concerne un système de conditionnement (1) d'aliment de type purée et/ou liquide facilement utilisable, ayant un impact écologique faible et dont le cout d'utilisation est diminué.

La présente invention est un système de conditionnement (1) de type purée et/ou liquide, par exemple de purée de bananes à destination de contenant opaque tel que des sachets de compote individuel.

Selon l'invention, et comme illustré en figure 1, le système de conditionnement (1) comprend un système de fourniture (2) en continu d'un film thermoscellable (21), un dispositif de formation (3) séquentiel de contenants (10) à partir du film thermoscellable (21), un système de pasteurisation (4) de l'aliment, équipé d'un dispositif de remplissage (5) à chaud de chaque contenant (10), formé par le dispositif de formation (3), par une quantité donnée d'aliment pasteurisé, le dispositif de remplissage (5) à chaud étant agencé pour distribuer ladite quantité donnée d'aliment pasteurisé à une température supérieure à 80°C et un système de fermeture (6) par thermo-scellage de chaque contenant (10) rempli de ladite quantité donnée.

Ainsi, un remplissage à chaud, c'est-à-dire, à une température supérieure à 80°C, permet d'éviter l'utilisation d'un système de conditionnement aseptisé, nécessaire dans un système de conditionnement à froid, c'est-à-dire, à une température de 25°C ou inférieure, venant alourdir le coût économique et écologique.

Dans un mode de réalisation préféré, et comme représenté en [Fig. 3] et en [Fig. 4], le film thermoscellable (21) comprend une peau extérieure (210) et une peau intérieure (211), chaque peau (210, 211) est composée d'au moins deux couches.

Ainsi, la peau extérieure (210) comprend une couche supérieure (2100) en métal, plus particulièrement une couche en métallique en polyester d'une épaisseur de 12 micromètres, une couche intermédiaire (2101) en nylon d'une épaisseur de 15 micromètres et une couche inférieure (2102) en polyéthylène basse densité linéaire, LLDPE d'une épaisseur de 50 micromètres.

La peau intérieure (211), quant à elle, comprend une couche supérieure (2110) et inférieure (2111) composées par un mélange de LLDPE, d'une épaisseur de 50 micromètres chacune.

Selon un mode de réalisation particulier, le dispositif de formation (3) séquentiel de contenants (10) à partir du film thermoscellable (21) est agencé pour former des sacs d'une contenance de 20 kilogrammes.

Dans un mode de réalisation préféré, comme illustré en figure 2 et afin d'accélérer le remplissage (5) du contenant (10), le dispositif de formation (3) et le dispositif de remplissage (5) à chaud sont agencés de sorte que la formation et le remplissage du contenant (10) soient réalisés de manière concomitante.

Selon un mode de réalisation particulier, le dispositif de formation (3) comporte un manchon (31) creux cylindrique, autour duquel vient se former le contenant (10) à partir du film thermoscellable (21) et le dispositif de remplissage (5) comporte une ensacheuse (51) comprenant un guide de remplissage (510) du contenant (10), préalablement formé, traversant le manchon (31) du dispositif de formation (3) séquentiel de contenants (10).

Dans un mode de réalisation particulier, et comme illustré en figure 1, le système de conditionnement (1) comprend un système de refroidissement (7) du contenant (10) préalablement rempli de la quantité donnée d'aliment, ledit système (7) comporte un ensemble de vaporisateurs d'eau (71).

Selon un mode de réalisation particulier, le système de conditionnement (1) comprend des moyens d'injection (8) de gaz inerte dans le contenant (10), les moyens d'injection (8) sont de tout type adapté, particulièrement sous la forme d'un injecteur.

Le gaz inerte est de tout type adapté, plus particulièrement de l'azote afin de saturer le contenant (10) et d'éviter la présence l'oxygène dans le contenant (10) lors de son remplissage et ainsi permettre une meilleure conservation de la purée de bananes.

L'invention concerne également un procédé de conditionnement à chaud et en continu d'un aliment de type purée et/ou liquide mettant en oeuvre le système de conditionnement (1) comprenant au moins les étapes suivantes :
- Fourniture en continu d'un film thermoscellable (21) ;
- Formation séquentielle de contenant (10) à partir du film thermoscellable (21) par le dispositif de formation (3) séquentiel de contenants (10) ;
- Pasteurisation de l'aliment ;
- Remplissage d'une quantité déterminée à chaud du contenant (10), formé au préalable ; et
- Fermeture du contenant (10).

La description qui précède explique clairement comment l'invention permet d'atteindre les objectifs qu'elle s'est fixée, à savoir la réduction du coût d'utilisation d'un système de conditionnement d'aliment de type purée et/ou liquide, mais aussi d'en faciliter l'usage tout en réduisant son impact écologique, en proposant un conditionnement en continu et à chaud.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Système de conditionnement (1) d'aliment de type purée et/ou liquide, **caractérisé en ce qu'il** comprend :
- Un système de fourniture (2) en continu d'un film thermoscellable (21) ;
- Un dispositif de formation (3) séquentiel de contenants (10) à partir du film thermoscellable (21) ;
- Un système de pasteurisation (4) de l'aliment, équipé d'un dispositif de remplissage (5) à chaud de chaque contenant (10), formé par le dispositif de formation (3), par une quantité donnée d'aliment pasteurisé, le dispositif de remplissage (5) à chaud étant agencé pour distribuer ladite quantité donnée d'aliment pasteurisé à une température supérieure à 80°C ; et
- Un système de fermeture (6) par thermo-scellage de chaque contenant (10) rempli de ladite quantité donnée.

2. Système (1) selon la revendication 1, **caractérisé en ce que** le dispositif de formation (3) et le dispositif de remplissage (5) à chaud sont agencés de sorte que la formation et le remplissage du contenant (10) soient réalisés de manière concomitante.

3. Système (1) selon l'une des revendications précédentes, **caractérisé en ce que** le dispositif de formation (3) comporte un manchon (31) creux cylindrique, autour duquel vient se former le contenant (10) à partir du film thermoscellable (21).

4. Système (1) selon la revendication 3, **caractérisé en ce que** dispositif de remplissage (5) comporte une ensacheuse (51) comprenant un guide de remplissage (510) du contenant (10), préalablement formé, traversant le manchon (31) du dispositif de formation (3) séquentiel de contenants (10).

5. Système (1) selon l'une des revendications précédentes, **caractérisé en ce que** le film thermoscellable (21) comprend une peau extérieure (210) et une peau intérieure (211), chaque peau (210, 211) est composée d'au moins deux couches.

6. Système (1) selon la revendication 5, **caractérisé en ce que** la peau extérieure (210) comprend une couche supérieure (2100) en métal, une couche intermédiaire (2101) en nylon et une couche inférieure (2102) en LLDPE et la peau intérieure (211) comprend une couche supérieure (2110) et inférieure (2111) composées par un mélange de LLDPE.

7. Système (1) selon l'une des revendications précédentes, **caractérisé en ce que** le dispositif de formation (3) séquentiel de contenants (10) à partir du film thermoscellable (21) est agencé pour former des sacs d'une contenance de 20 kilogrammes.

8. Système (1) selon l'une des revendications précédentes, **caractérisé en ce qu'**il comprend un système de refroidissement (7) du contenant (10) préalablement rempli de la quantité donnée d'aliment, ledit système (7) comporte un ensemble de vaporisateurs d'eau (71).

9. Système (1) selon l'une des revendications précédentes, **caractérisé en ce qu'**il comprend des moyens d'injection (8) de gaz inerte dans le contenant (10).

10. Procédé de conditionnement à chaud et en continu d'un aliment de type purée et/ou liquide mettant en oeuvre le système de conditionnement (1) selon l'une des revendications 1 à 9, **caractérisé en ce qu'**il comprend au moins les étapes suivantes :
- Fourniture en continu d'un film thermoscellable (21) ;
- Formation séquentielle de contenant à partir du film thermoscellable (21) par le dispositif de formation (3) séquentiel de contenants (10) ;
- Pasteurisation de l'aliment ;
- Remplissage d'une quantité déterminée à chaud du contenant (10), formé au préalable ; et
- Fermeture du contenant (10).
